# EUROPEAN PATENT SPECIFICATION

(11) **EP 1 295 427 B1**
(45) Date of publication and mention of the grant of the patent: **25.03.2009**
(21) Application number: 01945164.0
(22) Date of filing: 19.05.2001
(51) Int. Cl.: H04L 1/18

(54) **SELECTIVE REPEAT PROTOCOL WITH DYNAMIC TIMERS**
SELEKTIVES WIEDERHOLUNGSPROTOKOLL MIT DYNAMISCHEN ZEITGEBERN
PROTOCOLE DE REPETITION SELECTIVE A TEMPORISATEURS DYNAMIQUES

(30) Priority: 25.05.2000 EP 00111296
(43) Date of publication of application: 26.03.2003
(73) Proprietor: TELEFONAKTIEBOLAGET LM ERICSSON (publ), 164 83 Stockholm (SE)
(72) Inventor: MEYER, Michael, 52080 Aachen (DE); SACHS, Joachim, 52074 Aachen (DE)
(74) Representative: Tonscheidt, Andreas
(86) International application number: PCT/EP2001/005748
(87) International publication number: WO 2001/091360

(56) References cited:
- EP-A- 0 658 028
- EP-A- 0 820 167
- US-A- 5 664 091
- US-A- 5 754 754
- PATENT ABSTRACTS OF JAPAN vol. 018, no. 646 (E-1641), 8 December 1994 (1994-12-08) & JP 06 252978 A (TOSHIBA CORP), 9 September 1994 (1994-09-09)

## Description

### Technical field of the invention

The present invention relates to a method according to the preamble of claim 1. Devices and software programs embodying the invention are also described.

### Background

When data packets are sent from a transmitter to a receiver, usually some packets are erroneous, i.e. not correctly received, due to transmission errors or loss. To cope with transmission errors and losses, ARQ (Automatic Repeat Request) protocols are used in most communication systems. In an ARQ protocol, the receiver checks whether a data packet is correctly received and sends a request for a retransmission of erroneous data packets to the transmitter. An example for an ARQ protocol which can be configured in a flexible way is the UMTS (Universal Mobile Telecommunication System) RLC (Radio Link Control) protocol as described in 3G TS 25.322 V3.2.0 of the 3^{rd} Generation Partnership Project.

One optimization issue for ARQ protocols is to transmit Service Data Units (SDU) from a higher layer of the protocol stack used in the communication system in the shortest possible time between transmitter and receiver. For transmission, an SDU is in general segmented into several data packets of the transmission protocol, e.g. PDUs (Packet Data Units) according to the RLC protocol. Every erroneous data packet is retransmitted according to the ARQ configuration. An SDU can only be delivered to the higher layer when all data packets containing data of said SDU have arrived correctly. Therefore the SDU delay is determined by the data packet which needs the longest time for successful transmission, generally one of those data packets with the highest number of retransmissions. As the SDUs are generally forward in a specified sequence, the result is often a bursty transmission pattern on the layer which is stacked upon the ARQ protocol layer.

Many ARQ protocols have a mechanism which enables the receiver to detect if data packets are lost. For this purpose, data packets are identified by a sequence number which is assigned by a counter in the transmitter and incremented for each transmitted data packet. A state variable in the receiver keeps track of the highest received sequence number of a data packet (denoted VR(H) for RLC PDUs in 3G TS 25.322). Because the sequence number is generally limited to a maximum value, e.g. by the size of a corresponding data field in the data packet, a modulo operation is performed, i.e. the counter is reset when the maximum value is reached. Therefore the term "highest sequence number" refers throughout this description to the highest value of the sequence number before the modulo operation.

To avoid confusions due to the limited amount of sequence numbers, a reception window is defined with a lower limit denoted VR(R) and an upper limit denoted VR (MR) in 3G TS 25.322. Only data packets with sequence numbers in this interval are accepted by the receiver while all other data packets are discarded. The reception window is shifted according to the data packets received.

If data packets are transmitted in sequence and no reordering occurs on the transmission link, a transmission error can be detected by checking whether a sequence number is missing, i.e. whether a received sequence number is not equal to the last received sequence number plus the counter increment. As data packets identified as erroneous are preferably discarded without check of the sequence number, this implies that all data packets with a sequence number between the last and the present received sequence number have had an error or are lost. A similar mechanism is applied also in other ARQ protocols, e.g. SSCOP (Service Specific Connection Oriented Protocol). With this mechanism transmission errors can only be detected for the first transmission of a data packet while it is not possible to detect if any retransmission is erroneous. However, in particular retransmissions determine the SDU delay.

To request a retransmission, the receiver sends a status message to the sender, the message containing positive and negative acknowledgements of data packets. The transmitter then retransmits the requested data packets, i.e. those with a negative acknowledgement. These steps are repeated until all data packets have been received correctly. Both between two status messages and between the reception of a data packet and the subsequent status message, certain delay times exist. It is generally possible (e.g. by setting the STATUS prohibit timer in UMTS RLC) to specify these times, especially to avoid unnecessary retransmissions. Different triggers for a status message are possible. One common trigger for the transmission of a further status message is the detection of errors in data packets transmitted for the first time.

Alternatively or in addition, the Estimated PDU Counter (EPC) as described in 3G 25.322 can be used to estimate the arrival of retransmitted data packets from rate information, Transport Format Combination Identity (TFCI) and an estimated RLC round trip time. In the EPC method, the estimated round trip time of a message is stored in an EPC_timer, i.e. when the timer is expired, the first data packet retransmitted upon a request should arrive. With the reception of every received data packet, an EPC_counter is deducted which contains the number of requested data packets. Therefore, all requested packets should have arrived, when the EPC_counter is equal to zero. The EPC can then be used to trigger a further status message. However, the EPC method is sensitive to the precise determination of the round trip time which can vary due to scheduling especially when MAC (Medium Access Control) multiplexing is used to combine several RLC channels on a common channel. On common channels, the round trip time is almost impossible to estimate. Furthermore, the user equipment identity and logical channel identity is not accessible on the RLC layer for common channels from then TFCI. So the EPC cannot be used on common channels and the uncertainty of the RLC round trip time degrades the EPC performance also on dedicated channels.

Patent US 5 664 091 describes a further example of an ARQ protocol, which avoids unnecessary retransmissions in the case of multicast transmission. For this purpose, the data packets comprise a data field indicating a retransmission cycle. The value of the retransmission cycle is evaluated to avoid multiple retransmissions of the same data packet within a cycle. A delay timer in the transmitter avoids unnecessary retransmissions due to different propagation delays to the receivers of the multicast transmission.

European patent application EP 0 820 167 A2 describes a still further example of an ARQ protocol, which addresses the problem of ambiguous sequence numbers due to a modulo numbering scheme by determining a maximum number of retransmissions for a data packet. In some embodiments of the protocol, checks are performed whether data packets are new or retransmitted data packets to maximize the number of retransmissions without ambiguities. A delay timer in the receiver avoids unnecessary retransmissions of the same data packet by determining a delay time before a further request for the same data packet may be sent by the receiver.

Although application EP 0 820 167 A2 and patent US 5 664 091 describe delay timers, the problem of an optimum setting of said timers is not addressed. It is proposed to set the timers to predetermined values, e.g. according to a measured round trip delay prior to communication. However, especially in the case of varying round trip delays, this does not allow an optimum setting of said and timers and other operating parameters, allowing for a low transmission delay while avoiding unnecessary retransmissions and reducing the burstiness of the transmissions.

### Summary and description of the invention

It is an object of the present invention to obviate the above disadvantages and improve the determination and adaptation of operating parameters in a transmission according to an ARQ protocol. It is a further object, to reduce the transmission time of data packets. It is still a further object, to reduce the burstiness of packets forwarded to higher layers in the protocol stack.

According to the invention, the method described in claim 1 is performed. Furthermore, the invention is embodied in a receiver as described in claim 15 and a software program as described in claim 16. Advantageous embodiments are described in the dependent claims.

In the proposed method, a transmission of data packets from a transmitter to a receiver is performed. The receiver performs a first check whether a data packet is correctly received and sends a request for a retransmission of erroneous data packets to the transmitter. The receiver performs also a second check whether a received data packet is a retransmission. The result of the second check is evaluated to adapt an operating parameter of the receiver or determine an operating parameter. This operating parameter of the receiver determines a delay of a further request for a retransmission. For example the detection of retransmissions can be used to determine the round-trip time from the difference between the sending of the request and the reception of the retransmission. The performance of the protocol can be improved using the measured values to adapt operating parameters, e.g. timers, accordingly in the transmitter or receiver.

By precise adaptation of operating parameters, the transmission time of data packets can be reduced. As a result, also the SDU delay for protocol layers supplied with data packets by an ARQ protocol can be reduced. With increasing number of retransmissions, i.e. a high block error rate which is significantly large in wireless systems, the SDU delay also increases and the more significant is the improvement of the proposed method. Especially for a protocol with a delivering of SDUs in sequence, the burstiness of SDU delivery is reduced.

In contrast to EPC, the proposed method can also be used on common channels. It can be used independently of EPC. If it is applied combined with EPC, the uncertainty of the RLC round trip time can be reduced by stopping the EPC timer when the first retransmission is detected and start decreasing the EPC counter at that instant.

In a preferable embodiment, a further request for a retransmission is initiated according to the result of the second check. The conditions for sending a further request can be determined by a parameter which is in turn adapted due to the result of the second check. For example, the retransmission can be initiated by a timer expiry or a trigger which is adjusted according to the second check.

In many protocols, data packets are identified by a sequence number. The length of the sequence number is preferably limited to improve the performance of the protocol. To avoid a confusion of data packets when the number of retransmissions is high, a reception window is defined by a first variable identifying the first data packet in the sequence requested for retransmission. A data packet is preferably rejected if the sequence number is smaller than the first variable or larger than the first variable plus an offset which determines a window size.

If data packets are identified by a sequence number, the receiver can store a further variable identifying the last data packet in the sequence which was correctly received. In this case, the second check is preferably performed by determining whether the sequence number of a received packet is smaller than the sequence number of said further variable. In this way, the processing is accelerated and a further processing of data packets which are detected as erroneous by the receiver and are to be discarded can be avoided.

In an advantageous embodiment, a timer or counter determining the sending of a further request for a retransmission is set according to the result of the second check. Timers or counters which can be adapted in this way to improve the precision of the timing are for example the timers Timer_EPC, Timer_Status_Prohibit or Timer_Status_Periodic as defined in 3G TS 25.322.

Preferably, a further check is performed whether a retransmitted data packet is erroneous. For this purpose, the results of the first and second check can be combined. If erroneous data packets are discarded after the first check, the further check preferably detects whether all packets requested for retransmission are successfully received.

It is proposed that said further check comprises a detection whether the sequence number of a successfully received packet is equal to the first variable determining the position of the reception window. In this case, the position of the reception window can be adapted.

It is proposed that at least one condition for sending a request for the retransmission of an erroneous retransmitted data packet differs from the conditions for sending a request for the retransmission of an erroneous data packet which was transmitted for the first time, i.e. which was not retransmitted yet. In this way, the transmission of the data packets most critical for delay of SDUs can be accelerated while an unnecessary repeated transmission of data packets can be avoided.

In a preferable embodiment of the method, the sending of a request for retransmission, i.e. a status message, is triggered by the detection of an erroneous retransmitted data packet. It is possible to use a timer or counter to prohibit the sending until all data packets which were retransmitted are examined whether the retransmissions were erroneous.

A request for a further retransmission can be suspended while a retransmitted data packet is received. Preferably the request is suspended until all data packets requested for retransmission are received.

In an advantageous embodiment of the invention, the receiver stores which data packets are requested for retransmission, preferably by storing sequence numbers. As a result, retransmitted data packets can be identified by a simple comparison with the memory and especially the second check can be performed by comparison of stored and received sequence numbers.

To simplify the second check, the sequence number of the next requested data packet is determined, e.g. from the memory, and a retransmission is defined as erroneous if the sequence number of the next received data packet differs from the sequence number of the next requested data packet. By comparison of received and stored sequence numbers, a suspension of a further request for retransmissions can also easily be implemented.

The method is especially adapted for communication systems with a high error rate and large or variable round trip times. A typical example is a mobile communication system with data packet error rates on the order of several percent and round trip times between several 10 ms up to seconds.

A receiver in a mobile telecommunication system has a reception unit for receiving data packets from a transmitter. The receiver includes a processor for the detection of erroneous data packets and for initiating a request to the transmitter for a data packet detected as erroneous. The receiver can perform any of the above methods. The receiver can for example be part of a radio base station or user equipment in a mobile communication system.

It is preferable to embody the proposed method as a program unit which can be stored on a data carrier or is loadable into the processing system of a receiver. The unit comprises code for performing the steps of any of the above described methods when executed in a processing system.

The foregoing and other objects, features and advantages of the present invention will become more apparent in the following detailed description of preferred embodiments as illustrated in the accompanying drawings.

### Brief description of the drawings

- Fig. 1: shows simulated results of a data transmission
- Fig. 2: depicts the reception window in a receiver
- Fig. 3: illustrates the handling of data packets according to the invention
- Fig. 4: shows a preferable process for the handling of data packets according to the invention
- Fig. 5: shows a receiver for performing a method according to the invention

### Detailed description of the drawings

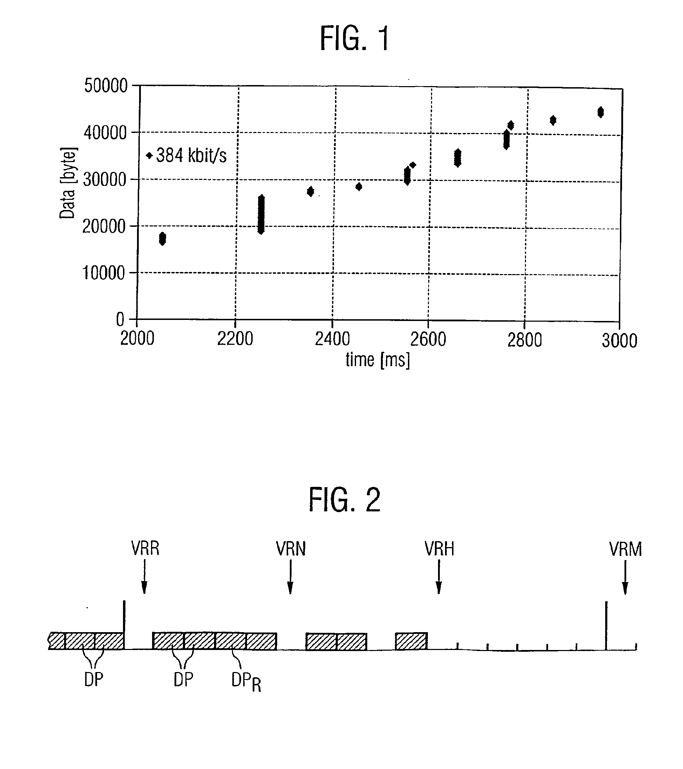

Figure 1 illustrates the problem of a bursty traffic pattern caused by the delay SDUs due to missing data packets on the RLC layer. Most ARQ (Automatic Repeat Request) protocols have an in-order SDU delivery. Therefore, PDUs which need to be retransmitted more than once delay not only the SDU for which they comprise data but also all subsequent SDU which may already be completely stored in the receiver. Because of the necessary storing and processing capacities for bursty traffic, it is disadvantageous in general and in particular for TCP (Transmission Control Protocol) traffic.

A simulation of a TCP receiver trace for a 384 kbit/s link in the state of the art is depicted in figure 1. As can be seen, RLC interactions do not lead to packet losses or TCP segment reordering for a reliable configuration of the link layer and in-order delivery of SDUs as used in the simulation. However, a bursty traffic pattern for received TCP segments is observable which is due to the ARQ mechanisms of the RLC layer. Missing RLC PDUs are retransmitted after the reception of a corresponding status message. The bundle of retransmitted PDUs and the in-order delivery causes the release of several TCP segments by the RLC at the same time, especially for high data rates. This effect is evident from the arrival of TCP segments in intervals of 100 ms which correspond to a STATUS prohibit timer set to 100ms, i.e. status messages are separated at least by this interval. Thus the periodicity of the status messages influences also the TCP layer. The bursty release of TCP segments is disadvantageous because it can cause problems with buffer overflows in the receiver or other entities, e.g. routers, to which the data is transferred from the receiver.

In figure 2, a reception window of a receiver for a protocol with packets arriving in a specified sequence is shown. The position of the reception window is determined by two state variables. The lower edge of the window corresponds to a first variable VRR containing the sequence number of the first data packet which has not been received yet. The variable VRR is updated when the corresponding data packet is received. The upper edge of the window is determined by the state variable VRM which is the value of variable VRR plus an offset, the offset being the window size. The receiver accepts only data packets with a sequence number larger of equal to variable VRR and smaller than variable VRM while other data packets are discarded.

Within the window, a variable VRH indicates the highest expected sequence number of a data packet. A data packet with a sequence number SN = VRH - 1 is successfully received while data packets with the sequence number SN = VRH or higher are not received yet. If the next data packet received has a sequence number larger than variable VRH, data packets with sequence numbers between VRH and the present number are erroneous. Data packets with a sequence number smaller than VRH were already transmitted to the receiver while data packets with a sequence number equal or larger than VRH are received for the first time. Variable VRH is updated with the reception of any data packet with a sequence number equal or larger.

In a typical situation, data packets are received and stored in the memory for the RLC layer of the receiver as indicated by the hatched data packets PD while other data packets have not been received yet. All packets with a sequence number smaller than VRR are successfully received and can be transferred for the assembly of SDUs for the next layer of the protocol stack. Between variables VRR and VRH, some data packets PD have been received while others are still missing. Between variables VRH and VRM, no data packets have arrived yet. For the proposed method, it is suitable to define a variable VRN denoting the next data packet expected for retransmission. In many situations, the values of variables VRR and VRN can be identical, e.g. during the transmission of data packets for the first time. However, when the last received retransmitted data packet is larger than VRR, e.g. data packet DP_{R} in the example, VRR and VRN can differ.

Basic ideas of the invention are to detect retransmissions, to find out which retransmissions are erroneous and to request retransmissions with low delay. It is possible to use the first of these steps only or the first and second step only to improve existing ARQ protocols. However, better protocol performance can be attained by a combination of all steps.

A detection of retransmissions can be used to improve the performance of timers which are used in the state of the art. It is possible to use several timers simultaneously in an ARQ protocol to configure the ARQ functions. Examples are the timers Timer_EPC, Timer_Status_Prohibit or Timer_Status_Periodic as defined in 3G TS 25.322. Preferably, the timers cause a separation of subsequent status messages by an interval which is equal to or slightly larger than the round trip time of the ARQ protocol. This avoids unnecessary retransmissions and allows at the same time a fast ARQ mechanism. By detecting retransmissions, it is possible to determine the round trip time by measuring the time a status message was sent and the time the first retransmission is received. The result can for example be an alternative to the Timer_EPC by beginning to decrease the EPC counter when the first retransmission is detected.

The detection of erroneous retransmissions can be used to trigger the transmission of status messages from the receiver to the transmitter when missing retransmissions are detected while in the state of the art only missing new transmissions are detected. The proposed method can trigger status messages more quickly for the most delay critical PDUs, i.e. those which have been erroneous again in the retransmission.

Requesting the retransmission of erroneous data packets with low delay further reduces the ARQ SDU delay. The ARQ principle described above is differentiated for new transmissions and retransmissions. The delay according to the state of the art is preferably only used between status messages corresponding to the first transmissions of data packets whereas the delay is selected significantly smaller before a status message requesting the retransmission of data packets which were already erroneously retransmitted.

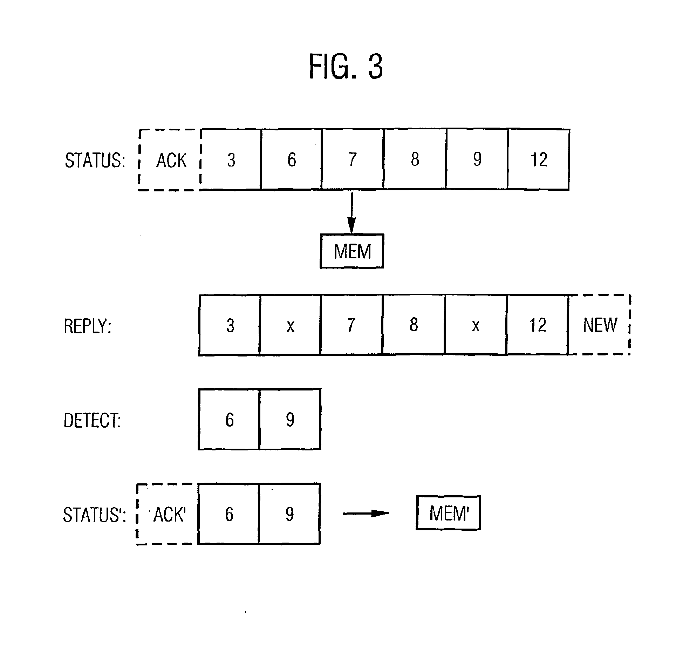

The execution of an advantageous embodiment of the proposed method is described with respect to figure 3. In ARQ protocols, retransmissions are preferably performed in order of increasing sequence numbers and retransmissions are transmitted before new data packets are sent, i.e. retransmissions have priority over new transmissions. This improves the performance of the protocol because the SDU delay is minimized and reception window stall conditions are avoided. Therefore, it is for example implemented in GPRS- (General Packet Radio Service), UMTS- and most other ARQ protocols. Priority of retransmissions over new transmissions is advantageous for the proposed embodiment although it may be preferable in some situations to perform some new transmissions before retransmissions, e.g. to clear a buffer.

When a message STATUS is sent, the receiver stores which data packets have been requested for retransmission in a memory MEM. In addition to the requested data packets, in the example the packets with the sequence numbers 3, 6, 7, 8, 9, 12, the message STATUS can comprise acknowledgements ACK for further data packets which were correctly received. After the message STATUS is sent, the receiver waits for the requested data packets. When requested data packets arrive in one or several response messages REPLY to the message STATUS, the receiver can detect retransmissions by comparison of the received and stored sequence numbers.

In the response messages REPLY, one or several data packets can be corrupted and are discarded as indicated by an x. Corrupted data can for example be detected by comparison of a check sum included in the data packet and a corresponding check sum calculated by the receiver. As the transmitter sends data packets in the same sequence as requested in the message STATUS, the receiver can immediately detect if retransmissions are lost. In the example, the receiver detects from comparison of the stored message STATUS and the contents of the message reply that the data packets with sequence numbers 6 and 9 are missing as soon as the packets with sequence numbers 7 and 12 are received, respectively. Missing retransmissions are indicated separately in step DETECT. The messages REPLY may also include further data packets NEW which are transmitted for the first time.

A further message STATUS' for requesting the erroneous retransmissions indicated in step DETECT is sent. It is possible to use the same message STATUS as for ordinary requests for retransmission. Alternatively, a special message is used, e.g. comprising a bit indicating to the transmitter that the request concerns an erroneous retransmission which can for example be used to adapt parameters of the transmitter for handling the response message. If a mechanism is used to delay the sending of messages STATUS by the receiver (e.g. a STATUS prohibit timer), preferably different conditions are applied to the sending of a message STATUS'. It can for example be sent immediately after detection of an erroneous retransmission, after all retransmissions have arrived or according to an attributed timer. For a check of the reply to message STATUS' for erroneous retransmissions, the requested data packets are stored in a memory MEM'.

Preferably, the contents of all messages STATUS, STATUS' are stored separately to simplify the handling.

Optionally, status information of data packets which were transmitted for the first time since the message STATUS can also be included into the message STATUS' as indicated by the acknowledgements ACK'. This can further accelerate the RLC performance if it is assured that this option does not interfere with the RLC configuration.

It is also possible, that erroneous retransmissions are requested with a regular message STATUS and not with a special message STATUS'. If a message STATUS is to be sent in this case - e.g. when a STATUS prohibit timer expires and a message STATUS has been triggered - the message STATUS is preferably delayed while retransmissions are received. The message STATUS is then sent when all retransmissions are received, so that it can include information about all erroneous retransmissions.

Many ARQ protocols are configured that the receiver does not send more than one STATUS message within a protocol round-trip time, e.g. to avoid unnecessary retransmissions. Because this assumption is not necessarily valid for the proposed method, retransmissions can not unambiguously be related to a specific message STATUS, STATUS'. The messages can be overlapping, i.e. have common areas of the receiver window on which they report. In this case, the information of all messages STATUS, STATUS' are stored in the receiver. When retransmissions arrive the memory contents for all messages are updated. By correlating received retransmissions with the open messages STATUS, STATUS', it is in many cases possible to identify which message triggered the retransmissions, e.g. from parts of the STATUS messages which do not overlap with another message.

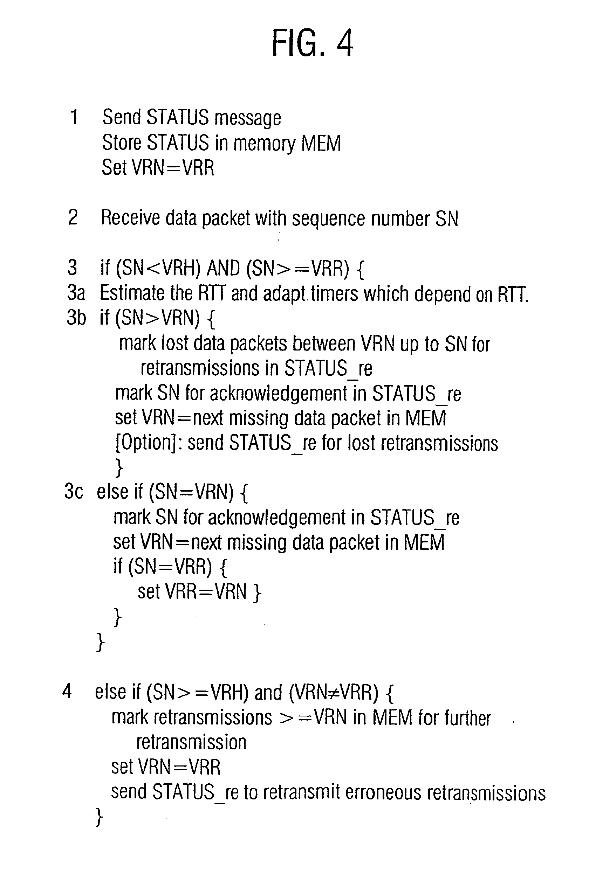

Figure 4 shows an example which is based on state variables as used in 3G TS 25.322. In addition, a new state variable VRN and a new memory MEM is added. The state variables and memories used in the example have the following meaning:
- VRR: sequence number of next expected in sequence data packet at the receiver
- VRN: sequence number of next expected retransmitted data packet at the receiver (new state variable)
- VRH: sequence number of highest expected data packet at the receiver
- MEM: receiver memory containing content of status message
- SN: sequence number of received data packet

A data packet is identified by its sequence number. Without considering the modulo operation with the maximum sequence number, the condition VRR≤ VRN ≤ VRH applies to the variables in the receiver. Data packets with sequence numbers SN ≥ VRH are first transmissions of a data packet, data packets with sequence numbers SN < VRR have been successfully transmitted and acknowledged by the receiver while data packets with sequence numbers SN between VRR and VRH are retransmissions.

Figure 4 shows a procedure for a fast detection of erroneous retransmissions and to initiate a fast re-retransmission of said data packets. Whenever a message STATUS is initiated in step 1, the state variable VRN is set to the value of variable VRR. The content of the message STATUS is stored in memory MEM. If more than one STATUS message is transmitted during a round-trip time, multiple memories MEM are necessary, one for each open STATUS message, or the contents of several status messages are stored together in one memory. The first option is preferable, especially as it simplifies the handling if a message STATUS is lost.

The receiver enters a waiting state for data packets. When a data packet is received in step 2, the sequence number SN is determined. The sequence number SN is then compared in step 3 to the variables VRH and VRR. If the condition (SN<VRH) and (SN>=VRR) applies, the data packet is a retransmission of a packet sent before and requested with the message STATUS in step 1. In this case, a round trip time has passed since the message STATUS was sent. From the measurement of this interval, optionally the round trip time is estimated in step 3a and timers which depend on the round trip time are adjusted.

In step 3b, the sequence number of the received-data packet is compared to the next expected retransmission stored in variable VRN. If both values differ, the retransmissions between VRN and SN are lost. In this case, the lost data packets with sequence numbers from VRN up to SN are marked to be requested for retransmission in corresponding message STATUS_re and the data packet with sequence number SN is marked for acknowledgement in a message STATUS_re. The variable VRN is updated and set to the sequence number of the next missing data packet in memory MEM. Optionally, the message STATUS_re for lost retransmissions can immediately be sent. Alternatively, a timer to prohibit the sending of the message STATUS_re can be more suitable. The advantages of the different options depend on the configuration of the ARQ protocol.

If the result of the comparison in step 3b is that the expected retransmission was received, the sequence number SN is marked in step 3c for acknowledgment in the next message STATUS_re. The variable VRN is set to the sequence number of the next missing data packet stored in the memory MEM. If the expected retransmission is a successful transmission of the next in sequence data packet, i.e. the data packet with the lowest sequence number still missing, the reception window of the receiver can be shifted. For this purpose, variable VRR is set to the value of variable VRN, i.e. the next missing data packet in the sequence.

If the comparison of step 3 has the result that the sequence number SN is equal or larger than variable VRH new data packets are transmitted for the first time and step 4 is initiated. In step 4, those erroneous retransmissions are detected which have sequence numbers between variable VRN and VRH. Correspondingly, retransmissions with a sequence number larger than VRN are marked in the memory MEM for further retransmission. The value of variable VRN is reset to VRR, i.e. the next expected retransmission is the first data packet in the sequence still missing. A message STATUS_re is sent as soon as possible to initiate a fast retransmission of erroneous retransmissions. The execution of step 4 can be omitted if the value of variables VRR and VRN are already equal. This condition is not necessary but advantageous as it avoids that step 4 is repeated if several data packets with sequence numbers larger than VRH are received.

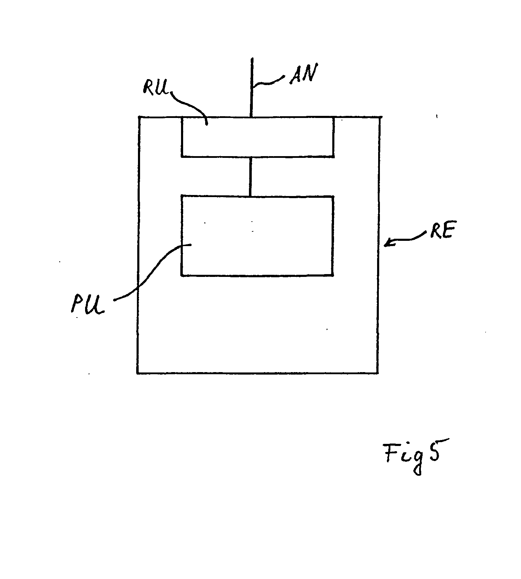

Figure 5 depicts a receiver RE adapted to perform the proposed method in a mobile telecommunication system. The receiver RE has a reception unit RU for receiving data packets from a transmitter via an antenna AN. The receiver RE includes a processing unit PU for the detection of erroneous data packets and for initiating a request to the transmitter for a data packet detected as erroneous. The receiver RE can perform any of the above methods. The receiver RE can for example be part of a radio base station or user equipment in a mobile communication system.

The above embodiments admirably achieve the objects of the invention. However, it will be appreciated that departures can be made by those skilled in the art without departing from the scope of the invention which is limited only by the claims.

## Claims

1. Method for a transmission of data packets from a transmitter to a receiver (RE), wherein the receiver (RE) performs a first check whether a data packet (DP) is correctly received and sends a request for a retransmission of data packets (DP), which are not correctly received, to the transmitter, wherein the receiver (RE) performs a second check whether a received data packet (DP) is a retransmission, and wherein an operating parameter of the receiver (RE) determines a delay of a further request for a retransmission, **characterised in that**
the result of the second check is evaluated to adapt said operating parameter or to determine said operating parameter.

2. Method according to claim 1, wherein a further request (STATUS') for a retransmission is performed according to the result of the second check.

3. Method according to claim 1 or 2, wherein data packets (DP) are identified by a sequence number (SN) and wherein a first variable (VRR) identifying the first data packet (DP) in the sequence requested for retransmission is stored and a data packet (DP) is rejected if the sequence number (SN) is smaller than the first variable (VRR) or larger than the first variable (VRR) plus a specified offset.

4. Method according to any preceding claim, wherein data packets (DP) are identified by a sequence number (SN) and wherein the receiver stores a variable (VRH) identifying the last data packet (DP) in the sequence which was correctly received, wherein the second check is performed by determining whether the sequence number (SN) of a received data packet is smaller than the sequence number (SN) of said variable (VRH) identifying the last data packet (DP) in the sequence which was correctly received.

5. Method according to any preceding claim, wherein a timer or counter determining the sending of a further request (STATUS) for a retransmission is set according to the result of the second check.

6. Method according to any preceding claim, wherein a further check is performed whether a retransmitted data packet (DP) is erroneous.

7. Method according to claim 6 as depending on claim 3, wherein the further check comprises a detection whether the sequence number (SN) of a successfully received data packet (DP) is equal to the first variable (VRR).

8. Method according to claim 6 or 7, wherein at least one condition for sending a request (STATUS) for the retransmission of an erroneous retransmitted data packet (DP) differs from the conditions for sending a request (STATUS) for the retransmission of an erroneous data packet (DP) which was transmitted for the first time.

9. Method according to claim 8, wherein the sending of a request (STATUS) for retransmission is triggered by the detection of an erroneous retransmitted data packet (DP).

10. Method according to any preceding claim, wherein a request (STATUS) for a further retransmission is suspended while a retransmitted data packet (DP) is received.

11. Method according to any preceding claim, wherein the receiver stores in a memory (MEM) which data packets are requested for retransmission.

12. Method according to claim 11, wherein the second check is performed by comparison of stored and received sequence numbers (SN).

13. Method according to claim 12, wherein the sequence number (VRN) of the next requested data packet (DP) is determined and a retransmission is defined as erroneous if the sequence number (SN) of the next received data packet (DP) differs from the sequence number (VRN) of the next requested data packet (DP).

14. Method according to any preceding claim, wherein the method is performed in a mobile communication system.

15. Receiver in a mobile telecommunication system with a reception unit (RU) for receiving data packets (DP) from a transmitter and a processor (PU) for the detection of data packets, which are not correctly received, in a first check whether a data packet (DP) is correctly received, wherein the processor (PU) is adapted to initiate a request to the transmitter for a data packet (DP) detected as not correctly received and wherein the receiver (RE) is adapted to send the request for a retransmission of data packets (DP), which are not correctly received, to the transmitter, wherein the receiver (RE) is adapted to perform a second check whether a received data packet (DP) is a retransmission, and wherein an operating parameter of the receiver (RE) determines a delay of a further request for a retransmission, **characterized in that** the receiver is adapted to evaluate the result of the second check to adapt said operating parameter or to determine said operating parameter.

16. Program unit on a data carrier or loadable into a processing system of a receiver (RE) for data packets transmitted from a transmitter to the receiver (RE), said program unit comprising code, which, when run on said processing system, performs the steps of a first check whether a data packet (DP) is correctly received and sending a request for a retransmission of data packets (DP), which are not correctly received, to the transmitter,
a second check whether a received data packet (DP) is a retransmission, and determines a delay of a further request for a retransmission according to an operating parameter of the receiver (RE), **characterized in that** the program unit is adapted to evaluate the result of the second check to adapt said operating parameter or to determine said operating parameter.

## Patentansprüche

1. Verfahren für eine Übertragung von Datenpaketen von einem Sender zu einem Empfänger (RE), wobei der Empfänger (RE) eine erste Prüfung durchführt, ob ein Datenpaket (DP) korrekt empfangen wird, und eine Anforderung für eine Neuübertragung von Datenpaketen (DP), welche nicht korrekt empfangen werden, an den Sender sendet, wobei der Empfänger (RE) eine zweite Prüfung durchführt, ob ein empfangenes Datenpaket (DP) eine Neuübertragung ist, und wobei ein Betriebsparameter des Empfängers (RE) eine Verzögerung einer weiteren Anforderung für eine Neuübertragung bestimmt, **dadurch gekennzeichnet, dass**
das Ergebnis der zweiten Prüfung ausgewertet wird, um den Betriebsparameter anzupassen oder um den Betriebsparameter zu bestimmen.

2. Verfahren nach Anspruch 1, wobei eine weitere Anforderung (STATUS') für eine Neuübertragung entsprechend dem Ergebnis der zweiten Prüfung durchgeführt wird.

3. Verfahren nach Anspruch 1 oder 2, wobei Datenpakete (DP) durch eine Sequenznummer (SN) **gekennzeichnet** werden und wobei eine erste Variable (VRR), die das erste Datenpaket (DP) in der Sequenz kennzeichnet, dessen Neuübertragung angefordert wird, gespeichert wird und ein Datenpaket (DP) zurückgewiesen wird, falls die Sequenznummer (SN) kleiner als die erste Variable (VRR) oder größer als die erste Variable (VRR) plus eine festgelegte Verschiebung ist.

4. Verfahren nach einem der vorhergehenden Ansprüche, wobei Datenpakete (DP) durch eine Sequenznummer (SN) **gekennzeichnet** werden und wobei der Empfänger eine Variable (VRH) speichert, die das letzte Datenpaket (DP) in der Sequenz kennzeichnet, welches korrekt empfangen wurde, wobei die zweite Prüfung durchgeführt wird, indem bestimmt wird, ob die Sequenznummer (SN) eines empfangenen Datenpaketes kleiner ist als die Sequenznummer (SN) der Variablen (VRH), die das letzte Datenpaket (DP) in der Sequenz kennzeichnet, welches korrekt empfangen wurde.

5. Verfahren nach einem der vorhergehenden Ansprüche, wobei ein Zeitgeber oder Zähler, der das Senden einer weiteren Anforderung (STATUS) für eine Neuübertragung bestimmt, entsprechend dem Ergebnis der zweiten Prüfung gesetzt wird.

6. Verfahren nach einem der vorhergehenden Ansprüche, wobei eine weitere Prüfung durchgeführt wird, ob ein neu übertragenes Datenpaket (DP) fehlerhaft ist.

7. Verfahren nach Anspruch 6, sofern abhängig von Anspruch 3, wobei die weitere Prüfung eine Feststellung umfasst, ob die Sequenznummer (SN) eines erfolgreich empfangenen Datenpaketes (DP) gleich der ersten Variablen (VRR) ist.

8. Verfahren nach Anspruch 6 oder 7, wobei mindestens eine Bedingung für das Senden einer Anforderung (STATUS) für die Neuübertragung eines fehlerhaften neu übertragenen Datenpaketes (DP) sich von den Bedingungen für das spenden einer Anforderung (STATUS) für die Neuübertragung eines fehlerhaften Datenpaketes (DP), welches zum ersten Mal übertragen wurde, unterscheidet.

9. Verfahren nach Anspruch 8, wobei das Senden einer Anforderung (STATUS) für eine Neuübertragung durch die Erkennung eines fehlerhaften neu übertragenen Datenpaketes (DP) ausgelöst wird.

10. Verfahren nach einem der vorhergehenden Ansprüche, wobei eine Anforderung (STATUS) für eine weitere Neuübertragung aufgeschoben wird, während ein neu übertragenes Datenpaket (DP) empfangen wird.

11. Verfahren nach einem der vorhergehenden Ansprüche, wobei der Empfänger in einem Speicher (MEM) speichert, welche Datenpakete für eine Neuübertragung angefordert werden.

12. Verfahren nach Anspruch 11, wobei die zweite Prüfung durch Vergleich von gespeicherten und empfangenen Sequenznummern (SN) durchgeführt wird.

13. Verfahren nach Anspruch 12, wobei die Sequenznummer (VRN) des nächsten angeforderten Datenpaketes (DP) bestimmt wird und eine Neuübertragung als fehlerhaft definiert wird, falls sich die sequenznummer (SN) des nächsten empfangenen Datenpaketes (DP) von der Sequenznummer (VRN) des nächsten angeforderten Datenpaketes (DP) unterscheidet.

14. Verfahren nach einem der vorhergehenden Ansprüche, wobei das Verfahren in einem Mobilkommunikationssystem durchgeführt wird.

15. Empfänger in einem Mobilkommunikationssystem mit einer Empfangseinheit (RU) zum Empfangen von Datenpaketen (DP) von einem Sender und einem Prozessor zur Erkennung von Datenpaketen, welche nicht korrekt empfangen werden, in einer ersten Prüfung, ob ein Datenpaket (DP) korrekt empfangen wird, wobei der Prozessor (PU) dafür eingerichtet ist, eine Anforderung an den Sender für ein Datenpaket (DP) einzuleiten, das als nicht korrekt empfangen erkannt wurde, und wobei der Empfänger (RE) dafür eingerichtet ist, die Anforderung für eine Neuübertragurig von Datenpaketen (DP), welche nicht korrekt empfangen werden, an den Sender zu senden, wobei der Empfänger (RE) dafür eingerichtet ist, eine zweite Prüfung durchzuführen, ob ein empfangenes Datenpaket (DP) eine Neuübertragung ist, und wobei ein Betriebsparameter des Empfängers (RE) eine Verzögerung einer weiteren Anforderung für eine Neuübertragung bestimmt, **dadurch gekennzeichnet, dass**
der Empfänger dafür eingerichtet ist, das Ergebnis der zweiten Prüfung auszuwerten, um den Betriebsparameter anzupassen oder um den Betriebsparameter zu bestimmen.

16. Programmeinheit auf einem Datenträger, oder die in ein Verarbeitungssystem eines Empfängers (RE) für Datenpakete, die von einem Sender zu einem Empfänger (RE) übertragen werden, ladbar ist, wobei die Programmeinheit Code umfasst, welcher, wenn er auf dem Verarbeitungssystem ausgeführt wird, die Schritte
einer ersten Prüfung, ob ein Datenpaket (DP) korrekt empfangen wird, und des Sendens einer Anforderung für eine Neuübertragung von Datenpaketen (DP), welche nicht korrekt empfangen werden, an den Sender, und
einer zweiten Prüfung, ob ein empfangenes Datenpaket (DP) eine Neuübertragung ist, ausführt, und eine Verzögerung einer weiteren Anforderung für eine Neuübertragung entsprechend einem Betriebsparameter des Empfängers (RE) bestimmt, **dadurch gekennzeichnet, dass**
die Programmeinheit dafür eingerichtet ist, das Ergebnis der zweiten Prüfung auszuwerten, um den Betriebsparameter anzupassen oder um den Betriebsparameter zu bestimmen.

## Revendications

1. Procédé de transmission de paquets de données d'un émetteur à un récepteur (RE), dans lequel le récepteur (RE) effectue une première vérification de ce que un paquet de données (DP) est reçu correctement et envoie une demande d'une retransmission de paquets de données (DP), qui ne sont pas reçus correctement, à l'émetteur, dans lequel le récepteur (RE) effectue une seconde vérification de ce que un paquet de données (DP) reçu est une retransmission, et dans lequel un paramètre de fonctionnement du récepteur (RE) détermine un retard d'une autre demande d'une retransmission, **caractérisé en ce que**
le résultat de la seconde vérification est évalué afin d'adapter ledit paramètre de fonctionnement et déterminer ledit paramètre de fonctionnement.

2. Procédé selon la revendication 1, dans lequel une demande supplémentaire (STATUS') d'une retransmission est effectuée en fonction du résultat de la seconde vérification.

3. Procédé selon la revendication 1 ou 2, dans lequel des paquets de données (DP) sont identifiés par un numéro de séquence (SN) et dans lequel une première variable (VRR) identifiant le premier paquet de données (DP) dans la séquence demandée à des fins de retransmission est mémorisée et un paquet de données (DP) est rejeté si le numéro de séquence (SN) est plus petit que la première variable (VRR) ou plus grand que la première variable (VRR) plus un décalage spécifié.

4. Procédé selon une quelconque des revendications précédentes, dans lequel des paquets de données (DP) sont identifiés par un numéro de séquence (SN) et dans lequel le récepteur mémorise une variable (VRH) identifiant le dernier paquet de données (DP) dans la séquence qui a été correctement reçue, dans lequel la seconde vérification est effectuée en déterminant si le numéro de séquence (SN) d'un paquet de données reçu est plus petit que le numéro de séquence (SN) de ladite variable (VRH) identifiant le dernier paquet de données (DP) dans la séquence qui a été correctement reçue.

5. Procédé selon une quelconque des revendications précédentes, dans lequel un temporisateur ou un compteur déterminant l'envoi d'une demande supplémentaire (STATUS) d'une retransmission est initialisé en fonction du résultat de la seconde vérification.

6. Procédé selon une quelconque des revendications précédentes, dans lequel une vérification supplémentaire est effectuée de ce que un paquet de données (DP) retransmis est erroné.

7. Procédé selon la revendication 6, dépendant de la revendication 3, dans lequel la vérification supplémentaire comprend une détection de ce que le numéro de séquence (SN) d'un paquet de données (DP) reçu avec succès est égal à la première variable (VRR).

8. Procédé selon la revendication 6 ou 7, dans lequel au moins une condition d'envoi d'une demande (STATLTS) en vue de la retransmission d'un paquet de données (DP) retransmis de manière erronée diffère des conditions pour envoyer une demande (STATUS) de retransmission d'un paquet de données (DP) erroné qui a été transmis pour la première fois.

9. Procédé selon la revendication 8, dans lequel l'envoi d'une demande (STATUS) de retransmission est déclenché par la détection d'un paquet de données (DP) retransmis de manière erronée.

10. Procédé selon une quelconque des revendications précédentes, dans lequel une demande (STATUS) d'une retransmission supplémentaire est suspendue alors qu'un paquet de données (DP) retransmis est reçu.

11. Procédé selon une quelconque des revendications précédentes, dans lequel le récepteur mémorise dans une mémoire (MEM) quels paquets de données sont demandés à des fins de retransmission.

12. Procédé selon la revendication 11, dans lequel la seconde vérification est effectuée en comparant des numéros de séquence (SN) mémorisés et reçus.

13. Procédé selon la revendication 12, dans lequel le numéro de séquence (VRN) du paquet de données (DP) suivant demandé est déterminé et une retransmission est définie comme erronée si le numéro de séquence (SN) du paquet de données (DP) suivant reçu diffère du numéro de séquence (VRN) du paquet de données (DP) suivant demandé.

14. Procédé selon une quelconque des revendications précédentes, dans lequel le procédé est mis en oeuvre dans un système de communication mobile.

15. Récepteur dans un système de télécommunication mobile comportant une unité de réception (RU) pour recevoir des paquets de données (DP) provenant d'un émetteur et un processeur (PU) pour la détection de paquets de données, qui ne sont pas correctement reçus, dans une première vérification de ce que un paquet de données (DP) est correctement reçu, dans lequel le processeur (PU) est adapté afin de lancer une demande à l'émetteur d'un paquet de données (DP) détecté comme n'étant pas correctement reçu et dans lequel le récepteur (RE) est adapté afin d'envoyer la demande d'une retransmission de paquets de données (DP), qui ne sont pas correctement reçus, à l'émetteur, dans lequel le récepteur (RE) est adapté afin d'effectuer une seconde vérification de ce que un paquet de données (DP) est une retransmission, et dans lequel un paramètre de fonctionnement du récepteur (RE) détermine un retard d'une demande supplémentaire d'une retransmission, **caractérisé en ce que**
le récepteur est adapté afin d'évaluer le résultat de la seconde vérification afin d'adapter ledit paramètre de fonctionnement ou de déterminer ledit paramètre de fonctionnement.

16. Unité de programme sur un support de données ou chargeable dans un système de traitement d'un récepteur (RE) pour des paquets de données transmis d'un émetteur au récepteur (RE), ladite unité de programme comprenant du code, qui, quand il est exécuté sur ledit système de traitement, met en oeuvre les étapes d'
une première vérification de ce que un paquet de données (DP) est correctement reçu et d'envoi d'une demande d'une retransmission des paquets de données (DP), qui ne sont pas correctement reçus, à l'émetteur,
une seconde vérification de ce que un paquet de données (DP) reçu est une retransmission, et détermine un retard d'une demande supplémentaire d'une retransmission selon un paramètre de fonctionnement du récepteur (RE), **caractérisée en ce que**
l'unité de programme est adaptée afin d'évaluer le résultat de la seconde vérification afin d'adapter ledit paramètre de fonctionnement ou déterminer ledit paramètre de fonctionnement.
